# EUROPEAN PATENT APPLICATION

(11) **EP 1 293 238 A1**
(43) Date of publication of application: **19.03.2003**
(21) Application number: 02255874.6
(22) Date of filing: 22.08.2002
(51) Int. Cl.: A63F 13/06

(54) **Game controller and signal input device**

(30) Priority: 14.09.2001 JP 2001280134
(71) Applicant: Konami Corporation, Minato-ku, Tokyo (JP); Konami Computer Entertainment Tokyo, Inc., Tokyo (JP)
(72) Inventor: Sakiyama, Takahiro, Konami Computer Ent.Tokyo,Inc., Tokyo (JP); Kawamoto, Norio, Konami Computer Ent. Tokyo, Inc., Tokyo (JP)
(74) Representative: Pluckrose, Anthony William

(57) **Abstract**

A signal input device allowing a user to input a coordinate command into a computer such as a game machine, without requiring a platform such as a desk, while the user holds the device with his hand, and to easily maintain an adequate positional relationship between his fingers and the pointing device. The device comprises a trackball (12), a grip (24), a trigger (16), and a trackball base (26). The user holds the grip (24) with his hand while placing the forefinger of that hand on the trigger (16) wherein a portion between the base and the second joint of the forefinger of the hand extends straight. The trackball base (26) having a track ball (12) mounted on its upper surface is mounted on the upper end of the grip (24) such that it abuts on the side of at least a portion between the base and the second joint of the user's forefinger of the hand holding the grip (24).

## Description

The present invention relates to a game controller and a signal input device, and in particular to a technique for allowing a player to input a coordinate command into a computer, such as a game machine, while holding the game controller and the signal input device, without requiring a platform such as a desk.

While Graphical User Interface, or GUI, comes to find more use in various computers, a variety of pointing devices, including optical or mechanical mice, pointing pads, tracking balls, and so forth, are introduced into a market.

However, all of these pointing devices need a platform such as a desk when being used. In other words, these are not usable when such a platform is not available.

In view of this point, Japanese Patent Laid-open Publication No. Hei 11-184626 discloses a mouse which has a handle so as to allow a user to freely operate the mouse without a mouse pad. Specifically, the mouse has a handle provided on its outer surface, and a user holds the mouse with a single hand so that he can operate the ball and function buttons with the fingers of that hand.

However, because the user must keep holding the handle tightly in order to retain an adequate positional relationship between his fingers and the ball, this mouse disclosed in the above-mentioned application is not suitable for use over a long period of time.

The present invention has been conceived in view of the above, and aims to provide a game controller and a signal input device which allows a player to input a coordinate command to a computer such as a game machine while holding the game controller and the signal input device, without requiring a platform such as a desk, and also allow the player to easily retain an adequate positional relationship between his fingers and the pointing device.

In order to achieve the above objects, according to the present invention, there is provided a game controller comprising a pointing device; a grip to be held by a player with at least one hand; a hook on which the player, while holding the grip with at least one hand, places his forefinger of that hand; and a base portion having the pointing device mounted on its upper surface and being mounted on an upper end of the grip such that it abuts on a side of the player's forefinger which is placed on the hook of at least one of the player's hands holding the grip.

According to the present invention, the player may hold the grip with his right or left hand, and put his forefinger of that hand on the hook. The base portion, which is mounted on the upper end of the grip, abuts on the side of the player' s forefinger of the hand holding the grip. This allows the player to support the base portion with his forefinger while operating the pointing device mounted on the base portion. That is, the player can input a coordinate command into the game machine while holding the game controller with his hand, without requiring a platform such as a desk. Further, because the player can support the base portion having a pointing device with his forefinger, he can easily retain an adequate positional relationship between his fingers and the pointing device.

In one embodiment of the present invention, the hook may be formed such that the player places the forefinger of at least one hand holding the grip on it, wherein a portion between a base and a second joint of the forefinger is kept extending straight. Further, the base portion may be formed such that it abuts, when the player holds the grip with at least one hand and places his forefinger of that hand on the hook, on a side of the portion between a base and a second joint of the forefinger. With this arrangement, because the base portion can be supported on a larger area on the side of the player's forefinger, the player can more easily retain an adequate positional relationship between his fingers and the pointing device.

In another embodiment of the present invention, the hook may be constructed as an input section via which a signal is input to a game machine. This allows the player to input a signal into the game machine using the fingers of the hand holding the grip.

In still another embodiment of the present invention, the grip may have an input section which can be pressed, when the player holds the grip with at least one of his right and left hands, by at least one of the player's little finger, ring finger, and middle finger of that hand to thereby input a signal to a game machine. This also allows the player to input a signal into the game machine using the fingers of the hand holding the grip.

According to another aspect of the present invention, there is provided a signal input device comprising a pointing device; a grip to be held by a user with at least one of his right and left hands; a hook on which the user, while holding the grip with at least one of his right and left hands, places the forefinger of that hand; and a base portion having the pointing device mounted on its upper surface and being mounted on an upper end of the grip such that it abuts on a side of the user's forefinger, which is placed on the hook, of at least one of the user's right and left hands holding the grip.

According to the present invention, the user may hold the grip with his right or left hand and place the forefinger of that hand on the hook. As a result, a base portion, which is mounted on the upper end of the grip, abuts on the side of the user's forefinger of the hand holding the grip. This allows the user to support the base portion with his forefinger while operating the pointing device mounted on the base portion. That is, the user can input a coordinate command into a computer while holding the signal input device with his hand, without requiring a platform such as a desk. Further, because the user can support the base portion having a pointing device with his forefinger, he can easily retain an adequate positional relationship between his fingers and the pointing device.

Preferred embodiments of the present invention will now be described by way of example only with reference to the accompanying drawings in which:
Fig. 1 is a perspective view showing a gun-type game controller according to an embodiment of the present invention;
Fig. 2 is plan view showing the gun-type game controller;
Fig. 3 is a front plan view showing the gun-type game controller;
Fig. 4 is a left-side view showing the gun-type game controller;
Fig. 5 is a right-side view showing the gun-type game controller;
Fig. 6 is a bottom view showing the gun-type game controller; and
Fig. 7 is a perspective view showing an example of using the gun-type game controller.

The entire disclosure of the corresponding Japanese application 2001-280134 filed on September 14, 2001 including specification, claims, drawings and summary, is incorporated herein by reference.

In the following, exemplary embodiments of the present invention will be described in detail with reference to the accompanying drawings.

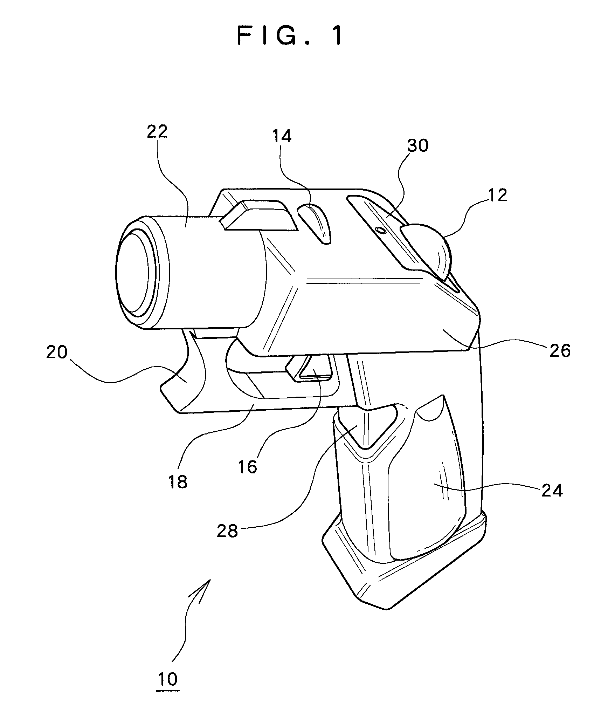

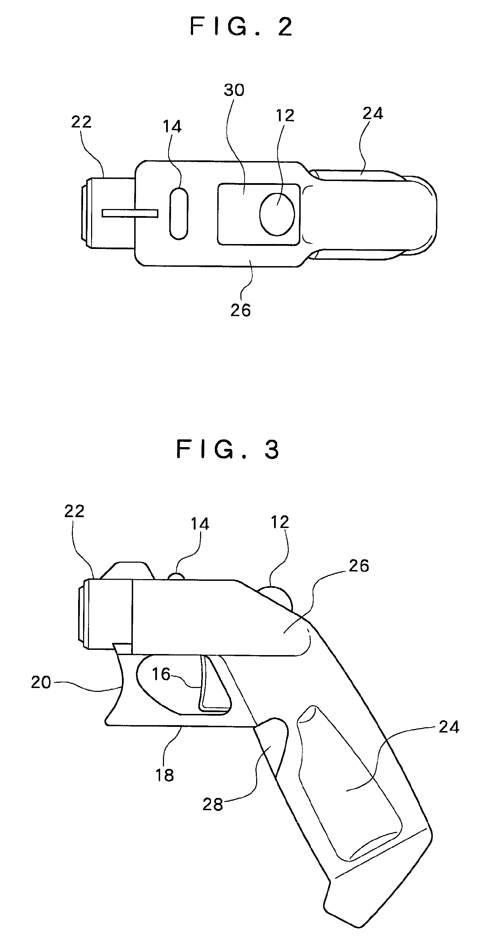

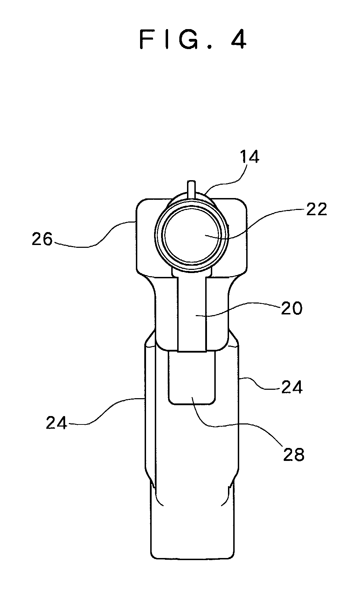

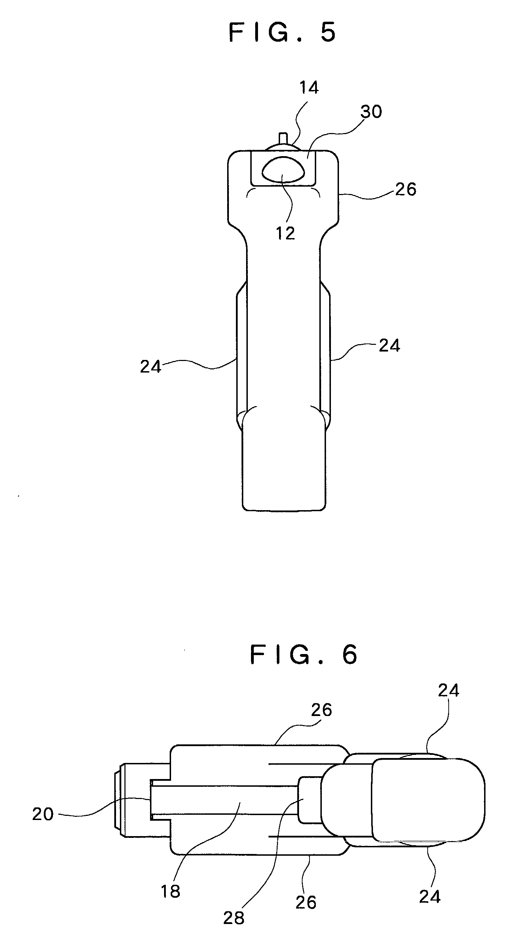

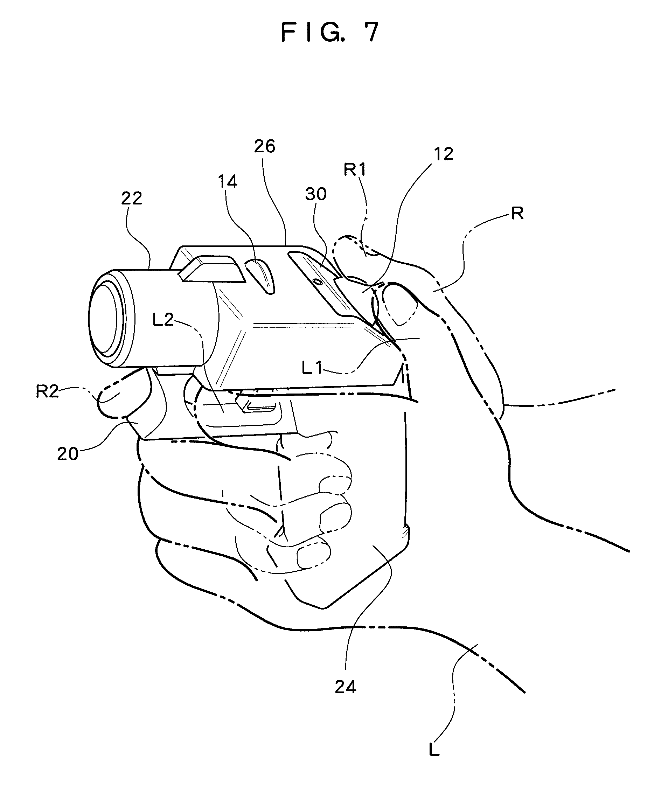

Fig. 1 is a perspective view showing a gun-type game controller (a signal input device) according to an embodiment of the present invention. Fig. 2 is a plan view showing the same gun-type game controller. Fig. 3 is a front plan view showing the same gun-type game controller. Fig. 4 is a left-side view showing the same gun-type game controller. Fig. 5 is a right-side view showing the same gun-type game controller. Fig. 6 is a bottom view showing the same gun-type game controller. Fig. 7 is a perspective view showing an example of using the same gun-type game controller.

The gun-type game controller 10 shown in these drawings is connected to a home-use game machine via a controller cable (not shown) pulled out from the lower end (a grip end) of a grip 24 so that the player can input mainly coordinate commands to the home-use game machine . It should be noted that, although an example in which the gun-type game controller 10 is used to input coordinate commands and so forth to a home-use game machine will be described here, it may be used to input coordinate commands and so forth to a general-purpose personal computer.

The gun-type game controller 10 is shaped like a gun so as to add to the atmosphere, particularly when a program for a gun-shooting game is executed in a home-use game machine . That is, the gun-type game controller 10 imitates the shape of a real gun, comprising a grip 24, a trigger 16, a barrel 22, and a trigger guard 18. Further, a trackball base (a base portion) 26 is mounted on the upper end of the grip 24, and a roller 14 and a trackball 12 are mounted on the upper surface of the trackball base 26.

That is, the trackball base 26 is a rectangular box-like member, the width of which is larger than the diameter of the barrel 22 and the thickness of the grip 24, and which extends from a position slightly in front of the trigger 16 to the rear end of the grip 24. The upper surface of the rear end portion of the trackball base 26 is diagonally cut off toward a direction opposite from the barrel 22. Specifically, approximately two-thirds from its front end of the upper surface of the trackball base 26 is formed parallel to the direction in which the barrel 22 extends, or the direction of the barrel 22, (and thus faces upwards when the controller 10 is being used), and the rest, or approximately one third from the rear end of the upper surface of the trackball base 26, is formed extending in a direction intersecting the direction of the barrel 22 (and thus slants facing the player when the controller 10 is being used).

A wide slot, or a slot which is long in the direction crossing the direction of the barrel 22, is formed on the upper surface of the trackball base 26 at a position closer to its front end, and the disk-like roller 14 partially projects through the slot. Inside of the trackball base 26, a shaft is provided extending in the direction of the barrel 22 for rotatably supporting the roller 14 so that the roller 14 can rotate around the shaft rightward and leftward. When the player touches the projected portion of the roller 14 to rotate the roller 14, the amount of rotation is input as an operation signal to the home-use game machine via the controller cable mentioned above.

Further, a substantially square opening is formed on the upper rear surface of the trackball base 26 at a position closer to its rear end, where the trackball 12 is accommodated, and a trackball cover 30 with a circular opening defined thereon is provided covering the substantially square opening such that the trackball 12, accommodated in the square opening, partially projects through the circular opening. The trackball 26 is supported by a plurality of supporting rollers, which are to be rotated when the player touches the projected portion of the trackball 12 and rotates the trackball 12. The amount of rotation of each of the supporting rollers is input as a game operation signal to the home-use game machine via the controller cable mentioned above. That is, the trackball 12 constitutes a known pointing device (a trackball).

A substantially cylindrical barrel 22 is attached to the front surface of the trackball base 26. In addition, a trigger 16, which is movable toward the grip 24, is attached to the base surface of the trackball base 26 and protected by a trigger guard 18, which is attached to the lower surface of the barrel 22 and the upper-side surface of the grip 24. The front end of the trigger guard 18 is formed into a guard end 20 which is recessed toward the grip 24, where the player can place one of his forefingers other than the one placed on the trigger 16 whereby the player can hold the gun-type game controller 10 more stably.

Further, a switch 28 is provided on the front surface of the grip 24 at a position immediately below where the trigger guard 18 is attached. The switch 28 can be pressed in a short stroke. When the player holding the grip 24 applies pressure using his middle finger to thereby press the switch 28, the fact that the switch 28 is pressed can be input as a game operation signal to the home-use game machine via the controller cable mentioned above.

Because the trackball 12 is attached to the trackball base 26 and the width of the trackball base 26 is larger than the diameter of the barrel 22 and the thickness of the grip 24, as described above, when the player holds the grips 24 with his right and left hands R, L and places, for example, his right forefinger R2 on the guard end 20 and left forefinger L2 on the trigger 16, as shown in Fig. 7, the bottom surfaces of the respective side-end portions of the trackball base 26 resultantly abut on the sides of the player's right and left forefingers R2, L2. With this positioning, the trackball 12 is naturally located under the player's right or left thumb R1 or L1 . When the player rotates the trackball 12 with either his right or left thumb R1 or L1, a downward force is exerted on the trackball base 26 through the player's operation of the trackball 12. With this gun-type game controller 10, despite this downward force, an adequate positional relationship between his thumbs R1, L1 and the trackball 26 can be easily maintained even though the player does not hold the grip 24 tightly because the bottom surfaces of the side-end portions of the trackball base 26 abut on the sides of his forefingers so that the trackball base 26 can be supported by his forefingers R2, L2.

It should be noted that, although the gun-type game controller 10 is held as shown in Fig. 7 when being used in the above, the player can hold the gun-type game controller 10 by putting his right and left forefingers on the controller 10 differently from the manner shown in Fig. 7 as the gun-type game controller 10 has a symmetrical shape on its right and left sides. Further, the player may hold the gun-type game controller 10 and operate the trackball 12 with one hand only. Alternatively, the player may hold the gun-type game controller 10 with one hand and operate the trackball 12 with the other hand. Still further, the player can use either his right or left hand to directly touch the grip 24 and place on the trigger 16 and the guard end 20.

In the gun-type game controller 10, the trackball base 26 is a substantially rectangular box which extends from a position slightly in front of the trigger 16 to the end of the grip 24 and the right and left side edges of the base surface of the trackball base 26 run straight from the position a little ahead of the trigger 16 to the end of the grip 26. Meanwhile, the player holding the gun-type game controller 10 puts his right or left forefinger R2, L2 on the trigger 16 or guard end 20, as a result of which a portion between the base and second joint of at least one of the player's forefingers extents straight (not bending). Thus, the base surfaces of the respective side ends of the trackball base 26 abut on the portion of the player's forefinger which extends straight. With this arrangement, the player can reliably support the trackball base 26 with his forefinger R2 or L2, and thus easily maintain an adequate positional relationship between his thumb R1 or L1 and the trackball 26.

It should be noted that the present invention is not limited to the above described embodiment.

For example, whereas a gun-type game controller 10 for inputting a game command to a home-use game machine is described above as one embodiment of the present invention, a gun-type game controller 10 may be used as a signal input device for inputting signals into other types of computers such as a personal computer. Further, the game controller 10 may have any shape within the scope of the present invention.

Still further, whereas the gun-type game controller 10 comprises a trackball 12 in the above, it may comprise other types of portable pointing device such as a pointing pad.

## Claims

1. A game controller, comprising:
a pointing device;
a grip to be held by a player with at least one of his hands;
a hook on which the player, while holding the grip with at least one of his hands, places his forefinger of that hand; and
a base portion having the pointing device mounted on its upper surface and being mounted on an upper end of the grip such that it abuts on a side of the player's forefinger, which is placed on the hook, of at least one of the player's hands with which the player holds the grip.

2. A game controller according to claim 1, wherein
the hook is formed such that the player places the forefinger of at least one of his hands with which he holds the grip wherein a portion between a base and a second joint of the forefinger is kept extending straight, and
the base portion is formed such that it abuts, when the player holds the grip with at least one of his hands and places the forefinger of that hand on the hook, on a side of the portion between a base and a second joint of the forefinger.

3. A game controller according to claim 1 or claim 2, wherein
the hook is constructed as an input section via which a signal is input to a game machine.

4. The game controller according to any one of the preceding claims, wherein the grip has an input section which can be pressed, when the player holds the grip with at least one of his hands, by at least one of the player's small finger, ring finger, and middle finger of that hand to thereby input a signal to a game machine.

5. A signal input device, comprising:
a pointing device;
a grip to be held by a user with at least one of his hands;
a hook on which the user, while holding the grip with at least one of his hands, places the forefinger of that hand; and
a base portion having the pointing device mounted on its upper surface and being mounted on an upper end of the grip such that it abuts on a side of the user's forefinger, which is placed on the hook, of at least one of the user's hands holding the grip.

6. A signal input device, comprising:
a pointing device;
a grip to be held by a user;
a hook on which the user places his forefinger/forefingers; and
a base portion having the pointing device mounted on its upper surface and being mounted on an upper end of the grip such that it abuts on at least a side of the user's forefinger/forefingers placed on the hook.
